# EUROPEAN PATENT SPECIFICATION

(11) **EP 2 326 532 B1**
(45) Date of publication and mention of the grant of the patent: **18.07.2012**
(21) Application number: 09788634.5
(22) Date of filing: 20.08.2009
(51) Int. Cl.: B60Q 1/068

(54) **REFLECTOR REGULATING ASSEMBLY OF A MOTOR VEHICLE LIGHT**
REFLEKTORREGULATIONSBAUGRUPPE FÜR EIN MOTORFAHRZEUGLICHT
ENSEMBLE DE RÉGLAGE DE RÉFLECTEUR D'UN PHARE DE VÉHICULE À MOTEUR

(30) Priority: 22.09.2008 SI 200800221; 02.12.2008 SI 200800296
(43) Date of publication of application: 01.06.2011
(73) Proprietor: Hella Saturnus Slovenija, Proizvodnja svetlobne opreme za motorna in druga vozila, d.o.o., 1000 Ljubljana (SI)
(72) Inventor: ANZIN, Tomaz, 1410 Zagorje ob Savi (SI); CERAR, Luka, 1260 Ljubljana-Polje (SI); MURSIC, Bojan, 1000 Ljubljana (SI)
(74) Representative: Borstar, Dusan
(86) International application number: PCT/SI2009/000036
(87) International publication number: WO 2010/033089

(56) References cited:
- EP-A- 0 857 608
- WO-A-03/098102
- DE-A1-102005 048 415
- DE-U1- 8 313 450
- US-A- 4 967 318
- US-A1- 2004 145 906
- US-A1- 2007 053 196

## Description

The present invention relates to a reflector regulation assembly of a motor vehicle light and belongs to the field of vehicles, namely to adjustable lightning equipment for motor vehicles.

The purpose of the invention is to create a regulating assembly, by means of which each desired position of the reflector could be adjusted from the front side i.e. in that direction, towards which said light reflector is facing, and at the same time applying such assembly should not involve any essential complications with respect to manufacturing such motor vehicle light, namely any modifying and adjusting of each particular part of the assembly to each particular shape and dimensions of a vehicle light.

A device is disclosed in DE 199 20 689 B4, which is intended for adjusting the distance between two parts, particularly in a vertical as well as in a horizontal direction. Such a device comprises an adjusting spindle or worm, which is axially fixed and interconnected with the first part, in particular a light casing, and comprises a thread extending along at least a part of the length of the worm and is adapted to cooperate with the second part or with a further guiding part, which is interconnected with said second part, in particular with a light reflector. Such a device further comprises a driving means, which is intended to rotate said spindle or worm, by which said spindle or screw is furthermore furnished by a clutch consisting of a first and a second part, which are mutually interconnected in such a manner that they are fixed in the axial direction and at the same time allow interruption of the transmission of torque as soon as a pre-determined value thereof is achieved. In the case, when the first part is a light casing, within which said spindle or worm is embedded, which may rotate around its longitudinal axis but is fixed and cannot be moved along this axis, and the second part represents a reflector, which can be pivoted around appropriate pivot joint either directly by means of said spindle or worm, or indirectly via appropriate guiding member, the practical exploitation of such solution may lead to numerous problems and deficiencies.

The first deficiency results from the fact that appropriate seats must be foreseen within the casing for the purposes of mounting said spindle or worm, which makes the shape of the internal surface of the casing quite complicated, on the basis of which then also the technological equipment for manufacturing of such casing is complicated. The term "technological equipment" should here annotate in particular molds used in processing thermoplastic materials, in which in such situation certain parts cannot be available, which serve as molding cores and must be displaceable in a direction transversely with respect to opening or closing the mold in the area of the joint plane in the contact area of both main parts of the mold. Such molds are then essentially more complicated that the classic mold are, and are correspondingly much more expensive and exposed to various risks with respect to reliability during exploitation thereof.

The second deficiency results from the fact that all the aforementioned parts are mounted within the casing, so that in addition to each space occupied by the reflector together with a light source an essential space is required for the purposes of introduction of the other aforementioned parts. Consequently, the casing needs to be much more bulky, which involves not only increasing of material consumption incl. using correspondingly larger and more expensive manufacturing tools, but also much more space within each vehicle intended to be furnished with such light, which normally leads to huge problems.

Still further assemblies are known in the prior art. A reflector regulation assembly of a motor vehicle light is described in US 2007/0053196. Such assembly comprises a spindle, which is intended for displacing a reflector, which is situated within a light casing and is within at least one pivot joint rotatable around at least one geometric axis of the light, in particular around the horizontal axis extending transversally with respect to the driving direction of the vehicle. Moreover, said spindle is rotatable around its longitudinal axis and is embedded within a corresponding passage on a bearing member, which represents an integral part of said casing. Such assembly furthermore comprises a sliding member, which is furnished on the one hand with a bolt and on the other hand with a threaded bush which is adapted to cooperate with the spindle. Said bolt of the sliding member is pivotally interconnected with the reflector and is inserted into a tubular guide, which is available on the light casing. By turning the spindle in each desired direction around its longitudinal axis, said sliding member is then linearly displaced to and fro along the longitudinal axis of said guide, by which the reflector is pivoted within its pivot joint relatively with respect to the casing. Consequently, each reflector is maintained in position within the light casing by means of said bolt of the sliding member. Position of the reflector can be modified by means of displacing the bolt, which is achieving by rotating the spindle within a threaded bush, which is rigidly connected with said slider and is normally integrated therein. Due to such a concept, the axis of said spindle and the axis of said bolt must extend essentially parallel to each other. Those skilled in the art are aware of the fact that vehicle light are manufactured in various shapes and dimensions, which generally both for casings and/or reflectors. The above specified concept requires design of special parts of regulating assembly for each particular motor light, by which said parts can be quite complicated.

A regulation assembly according to EP 0 857 608 A also comprises the spindle, which is on the first end portion furnished with a gear, and on the other end portion with a thread, which is adapted with a threaded bush which is integrated within the light casing. Thanks to said gear, the spindle can be rotated by means of a further gear on a further shaft, which can be accessed from the outside of said light casing and by which the spindle is rotated and simultaneously displaced relatively to the casing, by which also a reflector is then displaced, which is located within the light casing and is moreover rest on said threaded end portion of the spindle. Such concept leads to even more complicated parts, like e.g. gears, and leaves less freedom in the sense of possible placing the same simple parts into various vehicle lights with various shape and dimensions of the casing and/or reflector.

An assembly according to US 2004/0145906 A1 comprises a spindle which is inserted into a threaded bore of a sliding member, which is inserted into a guide consisting of female part i.e. a bolt and a male part i.e. a tubular guide, which is an integral part of a light casing. The gap exists between said male and female part, which is filed with sealing rings, which are spaced apart from each other in the axial direction. Consequently, the slider is on the one hand interconnected with the spindle and on the other hand with a reflector within said casing. Again, the axis of the spindle and the axis of said male and female part of the guide must extend parallel with respect to each other, which means that the above mentioned parts must be adjusted to each shape and size of the vehicle casing and/or reflector.

A further regulation assembly is described in DE 10 2005 048 415 A1, where the spindle is inserted into a threaded bush, which is interconnected with a gripping member, which is attached to a reflector. The spindle as such is rotatably embedded within a passage on the light casing. Said threaded bush is rigidly connected t said gripping member, and the axis of the spindle extends parallel to the longitudinal axis of the light casing, which is a tubular one, so that reflector is just partially inserted within the light casing and is sealed against the casing by itself.

DE 83 13 450 U discloses a regulation assembly, in which a spindle is inserted into a threaded bush, which is surrounded by a diaphragm, which is embedded within a passage on the first end portion of a transmission member, which is with its second end portion pivotally connected with the reflector located within the light casing. The intermediate portion of said transmission member between said first and second end portion is also surrounded with a diaphragm, which is embedded within a passage in the wall of the light casing. Indeed, the threaded bush is elastically interconnected with the surrounding diaphragm, but in the absence of the sliding member as well as of any other sufficiently reliable guiding means, the supporting and fixation of the reflector within the light casing appears to be weak, and the reflector can be pivoted in an undesired manner either due to inertia forces or due to vibrations during the use of such light in a motor vehicle. Moreover, behavior of diaphragms in various conditions, e.g. in various temperatures or due to moisture or dust can essentially vary during the time.

An improved reflector regulation assembly of a motor vehicle light in accordance with the present invention generally comprises a spindle, which is intended for displacing a reflector, which is situated within a casing and is within at least one pivot joint rotatable around at least one geometric axis of the light, in particular around the horizontal axis extending transversally with respect to the driving direction of the vehicle Said spindle is moreover rotatable around its longitudinal axis and is embedded within a corresponding passage on a bearing member which represents an integral part of said casing

In accordance with the present invention, the problem is solved by means of features which are included in the independent claim. The regulation assembly of the aforementioned art comprises a sliding member, which is furnished on the one hand with a bolt and on the other hand with a threaded bush, wherein said bush is adapted to cooperate with the spindle, while the bolt of the sliding member is pivotally interconnected with the reflector and inserted into a tubular guide, which is available on the light casing, so that by turning the spindle in each desired direction around its longitudinal axis said sliding member is then linearly displaced to and fro along the longitudinal axis of said guide, by which the reflector is pivoted within its pivot joint relatively with respect to the casing.

Said sliding member is an uniform part and is at least in the area of the bolt relatively rigid, while the threaded bush, which is adapted to receive a spindle, is elastically connected with the slider and is capable to comply with variations of the angle between the longitudinal axis of the spindle and the longitudinal axis of the bolt receiving guide on the casing. Said reflector preferably comprises a hearing member in form of a female part of a spherical pivot joint, while on the other hand the bolt of the uniform sliding member comprises a spherical male protrusion, which is for the purposes of pivotally linking the reflector with the sliding member inserted into said bearing member and locked therein.

Said spherical protrusion is preferably located on the free end portion of the bolt of appropriately rigid sliding member, and said tubular guide is a cylindrical tubular guide formed integrally with the casing, and a seal, which is foreseen on the bolt of the sliding member, is preferably an O-ring.

Besides, said guide comprises two seats, which are located apart from each other, where the first seat is formed on the front surface of the tubular guide, which is faced toward the interior of the light, while the other seat is formed as a graduated area, which is narrowed in a direction towards the interior of the light. The seal on the bolt of the sliding member is rest on the internal surface of the guide and is located between the first and the second seat of said tubular guide. Also the bolt of the sliding member is furnished with seats, which are each per se adapted to rest on each corresponding seat on the tubular guide, when the sliding member is moved along the guide, whereas on the one side with regarding the seal an arrow-like arresting member is available, which is narrowed towards the interior of the light and located between the spherical protrusion and said seal and is intended to rest on the first seat located on the front surface of the guide, while the other seat, which is situated on the opposite side of the bolt of the sliding member with regard to said seal, is adapted to rest on the second seat on the internal surface of the tubular guide. In accordance with the invention, the casing of the light is preferably manufactured as an uniform part and consists of a thermoplastic polymeric material.

The present invention also refers to a motor vehicle light, which comprises an assembly in accordance with the previously annotated features, wherein such light may cither be a motor vehicle headlight or an originally or subsequently mounted fog lamp for motor vehicles.

Now the invention will be explained by means of an embodiment and in correlation with the enclosed drawing, whcrcin
Fig. 1 is a partial cross-section of a regulating assembly shown in the explosion view;
Fig. 2 is a perspective view of such assembly in its mounted state; and
Fig. 3 is a longitudinal cross-section of such regulating assembly.

A regulating assembly of a reflector 1 of a motor vehicle light essentially consists of a worm or a spindle 9, which is allowed to rotate around its longitudinal axis 90 and is rotationaly embedded on the outside portion of a casing 5, as well as of a sliding member 6, which is on the one hand interconnected with said spindle 9 and on the other hand with the reflector 1, which is situated within said casing 5 and is by means of appropriate lever 111 pivotally embedded within at least one pivot joint 110.

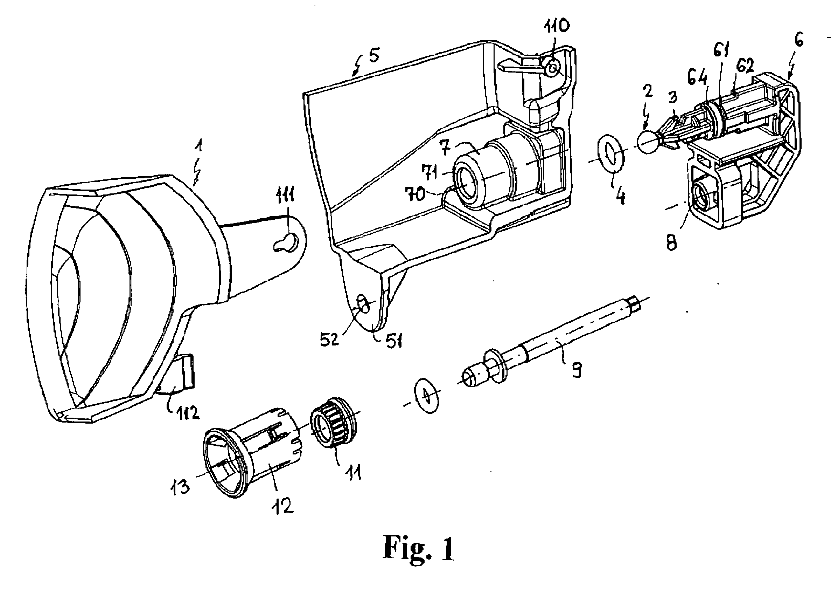

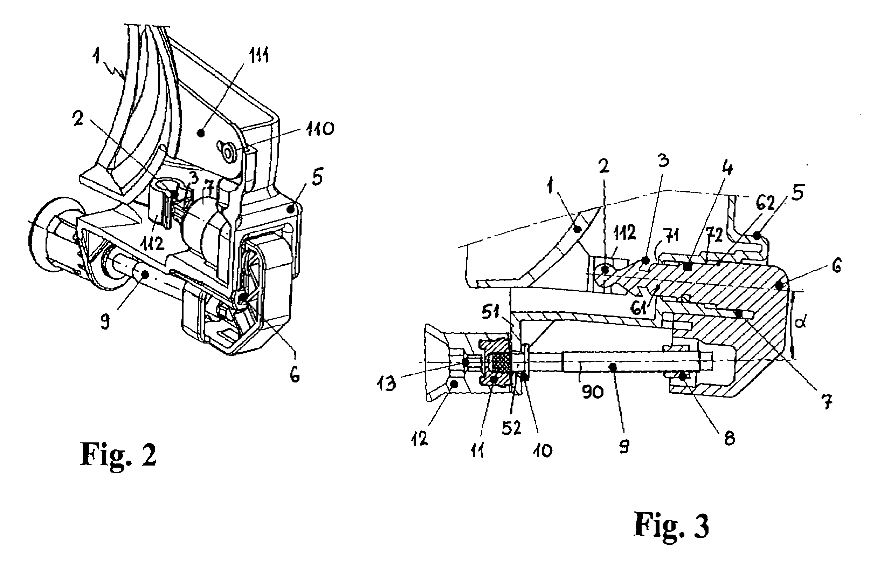

In this embodiment according to Figs. 1 - 3, said spindle 9 is attached to the casing 5 by means of appropriate cantilever beam 51, which is furnished with a passage 52 adapted to receive said spindle 9. In general, said cantilever beam 51 may also be substituted with any other bearing member, which is furnished with said passage 52 and either represents a part of the casing 5 or may also be available as a totally independent part, which is adapted to be mounted onto said casing 5 or to any other vehicle part available adjacent to the vehicle light. Besides, said spindle 9 can be embedded within said passage 52 of the casing 5 either in a displaceable or non-displaceable manner with regard to the longitudinal axis 90 of the spindle 9, which is however generally irrelevant with regard to the invention as such.

In the shown embodiment said spindle 9 is rotated around its longitudinal axis 90 by means of appropriately shaped member 13, which is then adapted to cooperate with various tools, by means of which a required adjusting of reflector 1 within the casing 5 is performed, wherein its portion 12 may serve as an outer part of a clutch, and its portion 11, which is pressed on the spindle 9, may serve as an inner part of a clutch, by means of which the spindle is protected against overstressing by torsion and consequently from essential deformation of the spindle 9 or any other parts connected therewith. Again, each particular embodiment and also the presence of said parts 11, 12, 13 are merely irrelevant with respect to realization of the invention as such.

In addition to said lever 111, which is adapted for being interconnected with the casing 5, said reflector 1 also comprises a bearing member 112, which forms a female portion of an essentially spherical pivot joint and is intended for establishing a required connection thereof with the previously mentioned sliding member 6.

The casing 5, within which the reflector 1 is arranged pivotally within at least one pivot joint 110, according to the invention also comprises a tubular guide 7, which is adapted to cooperate with the sliding member 6 and includes a first seat 71, which is arranged on its front portion faced towards the interior of the casing 5, and a second seat 72, which is arranged within said guide 7. In the embodiment according to Figs. 1 to 3, said guide 7 is available as a cylindrical tubular guide 7 having a longitudinal geometric axis 70, which extends at least approximately in a direction towards the bearing member 112 of the reflector 1.

According to the invention, said sliding member 6 is available as an uniform part and comprises at the one hand a bolt 61, which is adapted for inserting into said guide 7 of the casing 5, and on the other hand a threaded bush 8, which is adapted to receive said spindle 9 in order to cooperate therewith..

The threaded bush 8 of the sliding member 6 is generally formed integrally with said sliding member 6, and is despite to relatively high stiffness of the sliding member 6 elastically connected therewith in order to be able to compensate even relatively high variations of the angle α between the axis 70 of the guide 7 and the axis 90 of the spindle 9.

The bolt 61 of the sliding member 6 is furnished with a spherical protrusion 2, which is located on its free end and is adapted to remain engaged within a spherical cavity of the bearing member 112 of the reflector 1 just in order to establish a desired connection with the reflector 1 by means of such pivot joint. Furthermore, a seal 4 is foreseen on said bolt 61 within appropriate groove 64, and is preferably available as an O-ring adapted to establish appropriate sealing contact between the bolt 61 of the sliding member 6 and the inner surface of the tubular guide 7 of the casing 5, by which then on the one hand said sliding member 6 is allowed to be moved to and fro in its axial direction, whereas on the other hand both moisture and impurities arc prevented to penetrate into interior of the casing 5, which could otherwise easily occur due to possible variations of the pressure within the casing 5, which may for example result from possible temperature variations.

Still further, an arrow-like arresting member 3 is foreseen on the bolt 61 of the sliding member 6, which is furnished with the spherical protrusion 2; by which however said arresting member 3 converges in the direction towards the interior of the casing 5 and is located apart of said protrusion 2 and on the same side with regard to the seal 4, whilst on the opposite side of said bolt 61 with regard to the seal 4, a graduated seat 62 is foreseen, which is adapted to cooperate with the previously mentioned seat 72 of the guide 7.

As shown in Figs. 1 to 3, said sliding member 6, or the reflector 1 or also the spindle 9 together with each belonging elements, may be manufactured by using relatively simple plastics processing molds. Even the mold, which is intended for manufacturing a complete casing 5 and which generally consists of two parts, which are engaged or disengaged in the direction of the longitudinal axis 70 of the guide 7, may normally be relatively simple.

As soon as the aforementioned parts are manufactured *each per se* by means of such relatively simple equipment, the reflector 1 is interconnected with the light casing 5 in the area of said pivot joint 110, upon which the sliding member 6 (Fig. 1), previously equipped with a seal 4, is inserted into the guide 7, by which the arrow-like seat 3 is slightly deflected during the insertion but is then expanded appropriately as soon as it is introduced throughout the guide 7. The spherical protrusion 2 of the sliding member 6 is then arrested within the bearing member 112 of the reflector 1, upon which the lastly mentioned one remains interconnected with the sliding member 6. On the other hand, as soon as the spindle 9 is inserted throughout the passage 52 of the bearing member 51 of the casing 5, it is then screwed into the threaded bush 8 of the sliding member 6, by which said bush 8 is easily pivoted relatively to the sliding member 6 into each required position, which is determined by the angle α between the axis 90 of the spindle 9 and the axis 70 of the guide 7.

Rotation of the spindle 9 around its axis 90 results in a linear displacement of the sliding member 6 in each desired direction along the geometric axis 70 of the guide 7, since the bolt 61 is inserted into the guide 7 and is sealed therein by means of the seal 4, which due to interconnection between the sliding member 6 and the reflector 1 in the area of the pivot joint, which is formed by said spherical protrusion 2 of the sliding member 6 and said bearing member 12 in form of a spherical cavity, results in pivoting the reflector 1 in the area of pivot joint 110 of the casing 5. Those skilled in the art will no doubt understand that displacing the bolt 61 within the guide 7 in the direction towards the interior of the casing 5 i.e. towards the reflector 1, is limited by resting the graduated seat 62 of the sliding member 6 on the corresponding seat 72 of the guide 7, and that its displacing in the opposite direction is limited by resting the arrow-like protrusion 3 onto the seat 71 on the front surface of the guide 7.

## Claims

1. Reflector regulation assembly of a motor vehicle light, comprising a spindle (9), which is intended for displacing a reflector (1), which is situated within a casing (5) and is within at least one pivot joint (110) rotatable around at least one geometric axis of the light, in particular around the horizontal axis extending transversally with respect to the driving direction of the vehicle, wherein said spindle (9) is rotatable around its longitudinal axis (90) and is embedded within a corresponding passage (52) on a bearing member (51), which represents an integral part of said casing (5), wherein said assembly further comprises a sliding member (6), which is furnished on the one hand with a bolt (61) and on the other hand with a threaded bush (8), wherein said bush (8) is adapted to cooperate with the spindle (9), while the bolt (61) of the sliding member (6) is pivotally interconnected with the reflector (1) and is inserted into a tubular guide (7), which is formed integrally with the light casing (5), so that by turning the spindle (9) in each desired direction around its longitudinal axis (90) said sliding member (6) is linearly displaced to and fro along the longitudinal axis of said guide (7), by which the reflector (1) is pivoted within its pivot joint (110) relatively with respect to the casing (5), **characterized in that** said sliding member (6) is an uniform part and is at least in the area of the bolt (61) essentially rigid, while the threaded bush (8), which is adapted to receive a spindle (9), is elastically connected therewith and is capable to comply with variations of the angle (α) between the longitudinal axis (90) of the spindle (9) and the longitudinal axis (70) of the bolt (61) receiving guide (7) on the casing (5), and **in that** said tubular guide (7) comprises two seats (71, 72), which are located apart from each other, wherein the first seat (71) is formed on the front surface of the guide (7), which is faced toward the interior of the light, and the other seat (72) is formed as a graduated area, which is narrowed in a direction towards the interior of the light.

2. Reflector regulation assembly according to Claim 1, **characterized in that** a seal (4) is foreseen on the bolt (6 1) of the sliding member (6), wherein said seal (4) is rest on the internal surface of the guide (7) and is located between the first and the second seat (71, 72) of said guide (7).

3. Reflector regulation assembly according to Claim 1 or 2, **characterized in that** said bolt (61) of the sliding member (6) is furnished with seats (3, 62), which are each per se adapted to rest on each corresponding seat (71, 72) on the guide (7), when the sliding member (6) is moved along the guide (7), wherein on the one side with regard to said the seal (4) an arrow-like arresting member (3) is available, which is narrowed towards the interior of the light and located between the spherical protrusion (2) and said seal (4) and is intended to rest on the first seat (71) on the front surface of the guide, while the other seat (62), which is situated on the opposite side of the bolt (61) of the sliding member (6) with regard to said seal (4), is adapted to rest on the second seat (72) on the internal surface of the tubular guide (7).

4. Reflector regulation assembly according to Claim 2 or 3, **characterized in that** said seal (4) is an O-ring.

## Patentansprüche

1. Reflektorregulationsbaugruppe für ein Motorfahrzeuglicht, aufweisend eine Spindel (9), die dafür vorgesehen ist, einen Reflektor (1) zu bewegen, der sich innerhalb eines Gehäuses (5) befindet und innerhalb mindestens eines Zapfengelenks (110) um mindestens eine geometrische Achse des Lichts, insbesondere um die horizontale Achse, die sich quer in Bezug auf die Fahrtrichtung des Fahrzeugs erstreckt, drehbar ist, wobei die Spindel (9) um ihre Längsachse (90) drehbar und innerhalb eines entsprechenden Durchgangs (52) auf einem Lagerelement (51) eingebettet ist, das einen integralen Bestandteil des Gehäuses (5) darstellt, wobei die Baugruppe ferner ein Gleitelement (6) aufweist, das einerseits mit einem Bolzen (61) und andererseits mit einer Schraubbuchse (8) versehen ist, wobei die Buchse (8) dazu geeignet ist, mit der Spindel (9) zusammenzuwirken, während der Bolzen (61) des Gleitelements (6) schwenkbar mit dem Reflektor (1) verbunden und in eine rohrförmige Führung (7) eingeschoben ist, die mit dem Lichtgehäuse (5) einstückig ausgebildet ist, so dass durch Drehen der Spindel (9) in jede gewünschte Richtung um ihre Längsachse (90) das Gleitelement (6) linear entlang der Längsachse der Führung (7) hin und her verschoben wird, wodurch der Reflektor (1) innerhalb seines Zapfengelenks (110) relativ zu dem Gehäuse (5) verschwenkt wird, **dadurch gekennzeichnet, dass** das Gleitelement (6) ein einheitliches Teil ist und zumindest im Bereich des Bolzens (61) im Wesentlichen starr ist, während die Schraubbuchse (8), die dazu geeignet ist, eine Spindel (9) aufzunehmen, elastisch damit verbunden und geeignet ist, Änderungen des Winkels (α) zwischen der Längsachse (90) der Spindel (9) und der Längsachse (70) der den Bolzen (61) aufnehmenden Führung (7) auf dem Gehäuse (5) zu entsprechen, und dass die rohrförmige Führung (7) zwei Sitze (71, 72) aufweist, die beabstandet voneinander angeordnet sind, wobei der erste Sitz (71) auf der Vorderfläche der Führung (7) gebildet ist, die zum Inneren des Lichts weist, und der andere Sitz (72) als ein abgestufter Bereich gebildet ist, der in eine Richtung zum Inneren des Lichts verengt ist.

2. Reflektorregulationsbaugruppe nach Anspruch 1, **dadurch gekennzeichnet, dass** eine Dichtung (4) auf dem Bolzen (61) des Gleitelements (6) vorgesehen ist, wobei die Dichtung (4) auf der Innenfläche der Führung (7) aufliegt und sich zwischen dem ersten und dem zweiten Sitz (T1, 72) der Führung (7) befindet.

3. Reflektorregulationsbaugruppe nach Anspruch 1 oder 2, **dadurch gekennzeichnet, dass** der Bolzen (61) des Gleitelements (6) mit Sitzen (3, 62) ausgestattet ist, die jeweils für sich dazu geeignet sind, auf jedem entsprechenden Sitz (71, 72) auf der Führung (7) aufzuliegen, wenn das Gleitelement (6) entlang der Führung (7) bewegt wird, wobei auf der einen Seite bezüglich der Dichtung (4) ein pfeilartiges Arretierelement (3) verfügbar ist, das zum Inneren des Lichts verengt ist und sich zwischen dem kugelförmigen Vorsprung (2) und der Dichtung (4) befindet und auf dem ersten Sitz (71) auf der Vorderfläche der Führung aufliegen soll, während der andere Sitz (62), der sich auf der entgegengesetzten Seite des Bolzens (61) des Gleitelements (6) in Bezug auf die Dichtung (4) befindet, dazu geeignet ist, auf dem zweiten Sitz (72) auf der Innenfläche der rohrförmigen Führung (7) aufzuliegen.

4. Reflektorregulationsbaugruppe nach Anspruch 2 oder 3, **dadurch gekennzeichnet, dass** die Dichtung (4) ein O-Ring ist.

## Revendications

1. Ensemble de réglage de réflecteur d'un phare de véhicule à moteur, comprenant une tige (9), qui est destinée à déplacer un réflecteur (1), qui est situé à l'intérieur d'un boîtier (5) et est à l'intérieur d'au moins une articulation à pivot (110) rotative autour d'au moins un axe géométrique du phare, en particulier autour de l'axe horizontal s'étendant transversalement par rapport au sens de déplacement du véhicule, dans lequel ladite tige (9) est rotative autour de son axe longitudinal (90) et est intégrée à l'intérieur d'un passage (52) correspondant sur un élément support (51), qui représente une partie intégrante dudit boîtier (5), dans lequel ledit ensemble comprend en outre un élément coulissant (6), qui est équipé d'une part d'un boulon (61) et d'autre part d'une douille (8) filetée, dans lequel ladite douille (8) est adaptée à coopérer avec la tige (9), tandis que le boulon (61) de l'élément coulissant (6) est interconnecté de façon pivotante avec le réflecteur (1) et est inséré à l'intérieur d'un guide (7) tubulaire, qui est formé de façon intégrale avec le boîtier (5) de phare, de sorte que, en faisant tourner la tige (9) dans chaque sens désiré autour de son axe longitudinal (90), ledit élément coulissant (6) est déplacé linéairement vers l'avant et l'arrière le long de l'axe longitudinal dudit guide (7), ce par quoi le réflecteur (1) est fait pivoter à l'intérieur de son articulation à pivot (110) relativement par rapport au boîtier (5), **caractérisé en ce que** ledit élément coulissant (6) est une partie uniforme et est, au moins dans la région du boulon (61), essentiellement rigide, tandis que la douille (8) filetée, qui est adaptée à recevoir une tige (9), est connectée élastiquement avec celle-ci et est apte à se conformer avec des variations de l'angle (α) entre l'axe longitudinal (90) de la tige (9) et l'axe longitudinal (70) du guide (7) de réception du boulon (61) sur le boîtier (5), et **en ce que** ledit guide (7) tubulaire comprend deux sièges (71, 72), qui sont situés à part l'un de l'autre, dans lequel le premier siège (71) est formé sur la surface avant du guide (7), qui fait face vers l'intérieur du phare, et l'autre siège (72) est formé comme une zone progressive, qui est rétrécie dans un sens vers l'intérieur du phare.

2. Ensemble de réglage de réflecteur selon la revendication 1, **caractérisé en ce qu'**un joint (4) est prévu sur le boulon (61) de l'élément coulissant (6), dans lequel ledit joint (4) repose sur la surface interne du guide (7) et est situé entre le premier et le deuxième siège (71, 72) dudit guide (7).

3. Ensemble de réglage de réflecteur selon la revendication 1 ou 2, **caractérisé en ce que** ledit boulon (61) de l'élément coulissant (6) est équipé de sièges (3, 62), qui sont chacun en soi adaptés à reposer sur chaque siège (71, 72) correspondant sur le guide (7), lorsque l'élément coulissant (6) est déplacé le long du guide (7), dans lequel sur un côté par rapport audit joint (4), un élément d'arrêt (3) en forme de flèche est disponible, qui est rétréci vers l'intérieur du phare et situé entre la saillie sphérique (2) et ledit joint (4) et est destiné à reposer sur le premier joint (71) sur la surface avant du guide, tandis que l'autre siège (62), qui est situé sur le côté opposé du boulon (61) de l'élément coulissant (6) par rapport audit joint (4), est adapté à reposer sur le deuxième siège (72) sur la surface interne du guide (7) tubulaire.

4. Ensemble de réglage de réflecteur selon la revendication 2 ou 3, **caractérisé en ce que** ledit joint (4) est un joint torique.
